# EUROPEAN PATENT APPLICATION

(11) **EP 4 592 132 A1**
(43) Date of publication of application: **30.07.2025**
(21) Application number: 23951682.6
(22) Date of filing: 05.12.2023
(51) Int. Cl.: B60L 53/18, B60L 53/30, H02G 11/00, H02G 11/02

(54) **CHARGER**

(71) Applicant: LG ELECTRONICS INC., Yeongdeungpo-gu Seoul 07336 (KR)
(72) Inventor: OH, Sunghwan, Seoul 06772 (KR); LEE, Myoungku, Seoul 06772 (KR); LEE, Jiho, Seoul 06772 (KR); KANG, Sunghoon, Seoul 06772 (KR); JEONG, Junyeop, Seoul 06772 (KR)
(74) Representative: Vossius & Partner Patentanwälte Rechtsanwälte mbB
(86) International application number: PCT/KR2023/019926
(87) International publication number: WO 2025/121467

(57) **Abstract**

Abstract: A charger comprising; an outer case; a frame accommodated inside the outer case; a linear guide disposed on one surface of the frame and elongated in the up and down direction; a cable guide having a pulley guide that moves up and down along the linear guide, and a pulley rotatably installed on the pulley guide and guiding a charging cable; an upper retractor disposed on an upper portion of the frame and having a spring wound with an upper wire connected to the pulley guide; and a lower retractor disposed on the lower portion of the frame and having a spring wound with a lower wire connected to the pulley guide.

## Description

### [Technical Field]

The present disclosure relates to a charger having a charging cable.

### [Background Art]

A charger is a device used to charge a battery.

An example of a charger may be an electric vehicle charger that charges a vehicle such as an electric vehicle, and electric energy is supplied to the battery of the electric vehicle by connecting the charging connector provided at the end of the charging cable to the connection inlet installed in the electric vehicle.

In order to use the charging cable, the coiled charging cable is unwound and pulled out and then used. Due to its length, the pulled charging cable may touch the floor in the middle, and the part that touches the floor may be damaged, such as worn out by repeated use, and may be contaminated by contaminants on the floor.

An example of a charging device that can charge a battery is an electric vehicle charging device disclosed in Korean Patent Publication No. 10-2423210 B (announced on July 21, 2022), and the electric vehicle charging device comprises: a charger that provides a plurality of charging cables of different types; a communication-control unit that is connected to the charger and controls the charging cables; a motor drive that communicates with the communication-control unit; a support that is a fixed facility located on the top of the charger; A plurality of electric winches fixed to the support and arranged on the upper portion of the charger; a plurality of spring balancers having one side connected to each of the plurality of electric winches and the other side connected to each of the plurality of charging cables.

### [Disclosure]

### [Technical Problem]

The present embodiment provides a charger that allows a user to withdraw or retrieve a charging cable with less force.

The present embodiment provides a charger that can limit a rapid descent of a charging cable when retrieving the charging cable.

### [Technical Solution]

A charger comprises an outer case; a frame accommodated inside the outer case; a linear guide disposed on one surface of the frame and elongated in the up and down direction; a cable guide having a pulley guide that moves up and down along the linear guide, and a pulley rotatably installed on the pulley guide and guiding a charging cable; an upper retractor disposed on an upper portion of the frame and having a spring wound with an upper wire connected to the pulley guide; and a lower retractor disposed on the lower portion of the frame and having a spring wound with a lower wire connected to the pulley guide.

The linear guide, the upper retractor, and the lower retractor may be disposed on a rear surface of the frame.

A reaction force of the upper retractor and a reaction force of the lower retractor may be different.

The reaction force of the upper retractor may be less than the reaction force of the lower retractor.

The charger may further comprise a rear cover and the rear cover may cover the linear guide, the cable guide, the upper retractor, and the lower retractor.

The rear cover may be disposed at a rear of the outer case.

The charger of may further comprise a rear guide and a front guide disposed at the upper portion of the frame.

A height of the front guide may be higher than a height of the rear guide.

The rear guide and the front guide may be disposed to be inclined in the same direction.

The upper retractor may be closer to the rear guide of the rear guide and the front guide.

### [Advantageous Effect]

According to the present embodiment, the upper wire of the upper retractor and the lower wire of the lower retractor are each connected to the pulley guide, so that the force required for pulling out the charging cable as well as the force required for retrieving the charging cable can be minimized.

In addition, when the upper retractor retracts the charging cable, the pulley guide can be buffered so that the lower end of the charging cable does not descend abruptly, and damage or breakage that may occur when the lower end of the charging cable descends abruptly can be minimized.

In addition, when the charging cable is not in use, the hidden cable among the charging cables can be maximized, and the length of the exposed cable can be maximized when the charging cable is retracted.

### [Description of Drawings]

FIG. 1 is a view showing a charger according to the present embodiment,
FIG. 2 is a perspective view showing a charger according to the present embodiment,
FIG. 3 is a side view showing a charger according to the present embodiment,
FIG. 4 is a side view showing the inside of a charger according to the present embodiment,
FIG. 5 is a view showing the outer case and rear cover according to the present embodiment when separated,
FIG. 6 is a rear view showing a retractor according to the present embodiment,
FIG. 7 is a side view showing the inside of a retractor according to the present embodiment.

### [Best Mode]

Hereinafter, specific embodiments of the present invention will be described in detail with reference to the drawings.

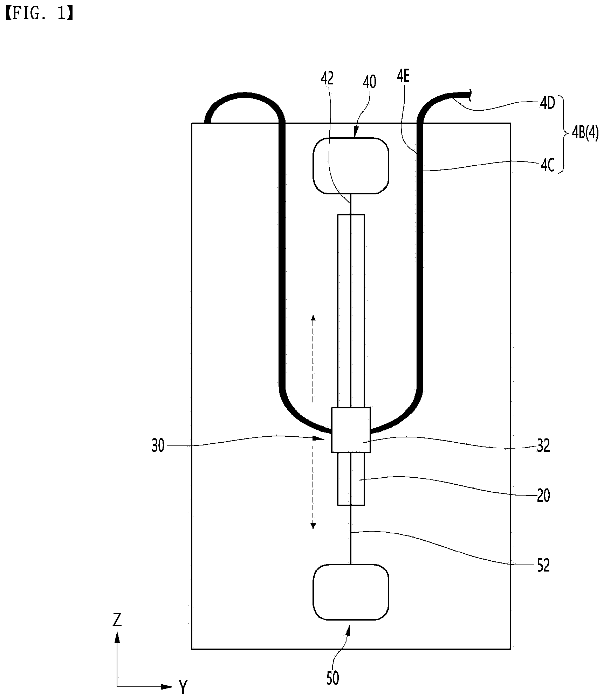

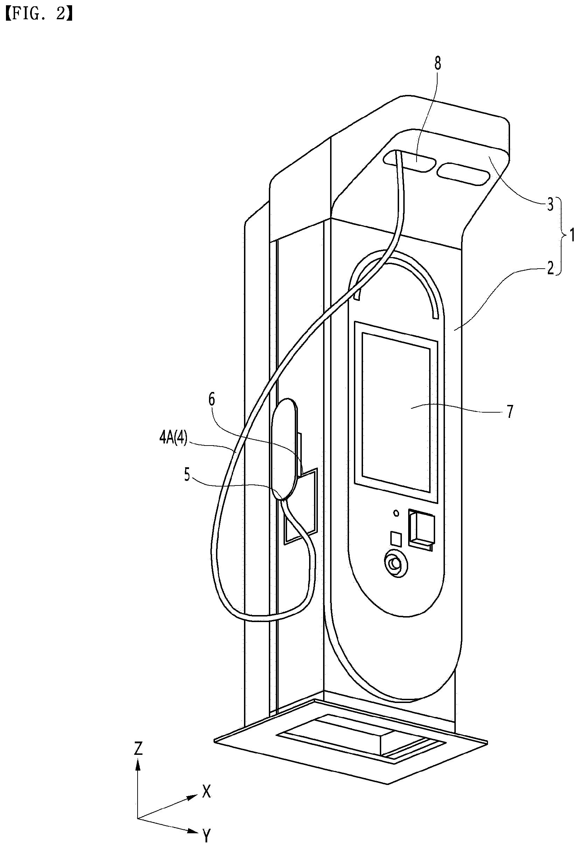

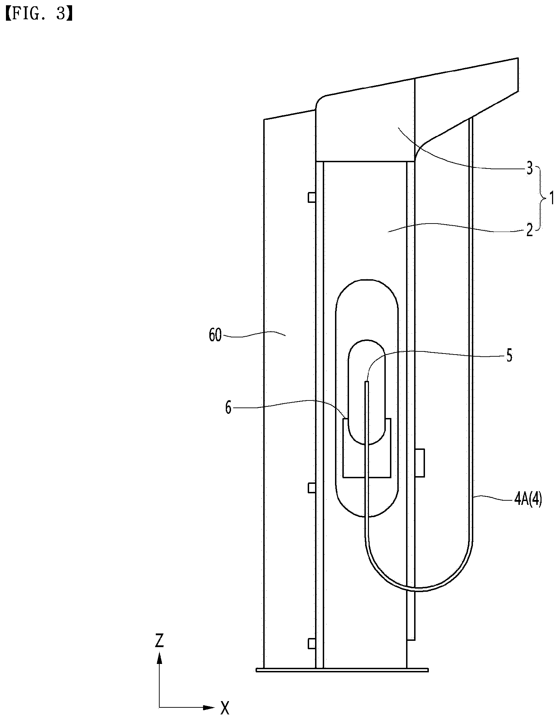

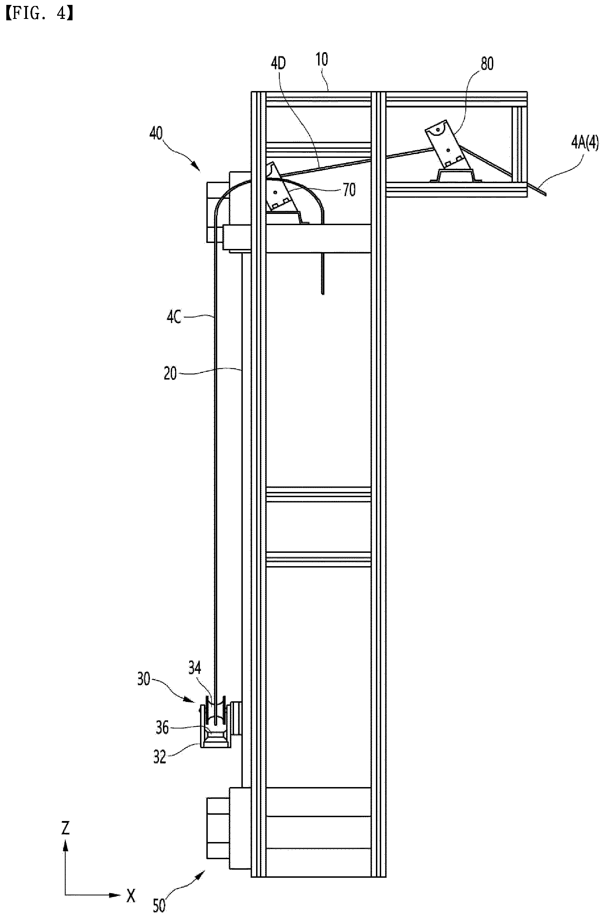

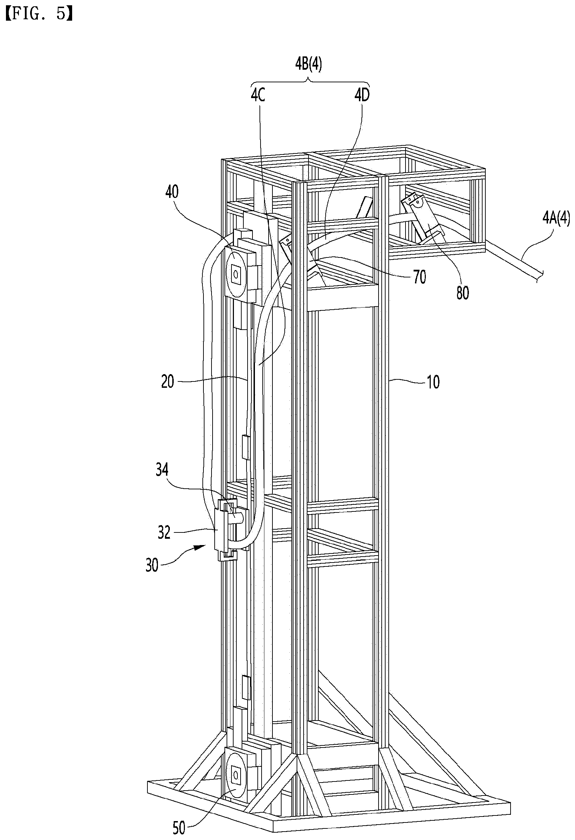

FIG. 1 is a view showing a charger according to the present embodiment, FIG. 2 is a perspective view showing a charger according to the present embodiment, FIG. 3 is a side view showing a charger according to the present embodiment, FIG. 4 is a side view showing the inside of a charger according to the present embodiment, and FIG. 5 is a view showing the outer case and rear cover according to the present embodiment when separated,

The charger may comprise an outer case 1.

The outer case 1 may form the exterior of the charger.

The outer case 1 may comprise a main case 2 and an upper body 3.

The main case 2 may be formed with a connector holder 6 on which a connector 5 of a charging cable 4 is placed.

A connection portion connected to a power supply unit disposed inside the outer case 1 may be formed at one end of the charging cable 4, and a connector 5 may be formed at the other end of the charging cable 4.

The connector 5 may be a charging gun or plug that may be connected to a vehicle such as an electric vehicle.

The connector holder 6 may be formed on at least one of the left and right surfaces of the case 2.

The main case 2 may be formed with a display 7. The display 7 may be placed on the front surface of the main case 2.

The upper body 3 may be placed on the upper portion of the main case 2. An opening 8, shown in Fig. 2 through which a charging cable 4 passes may be formed in the upper body 3.

The charging cable 4 may be a 500A cable for charging an electric vehicle.

Depending on whether the charging cable 4 is located inside the charger, it may be divided into an outer cable 4A that is drawn out to the outside of the charger and an inner cable 4B that is located inside the charger.

The outer cable 4A may be an exposed cable that is exposed to the outside of the charger. The outer cable 4A may be defined as a portion from the opening 8 to the connector 5.

The inner cable 4B may be a hidden cable that is covered by the charger.

The inner cable 4B may be defined as a portion from the power supply unit to the opening 8.

The charger may comprise a frame 10, a linear guide 20, a cable guide 30, an upper spring device 40, and a lower spring device 50.

The frame 10 may be accommodated inside an outer case 1.

The linear guide 20 may be disposed on one surface of the frame 10. The linear guide 20 may be elongated in the up and down direction Z.

The linear guide 20 may be disposed on the rear surface of the frame 10.

The inner cable 4B may pass through the linear guide 20, and the inner cable 4B may be reversed by the linear guide 20.

The inner cable 4B may be a rear cable 4C extending approximately vertically and located at the rear of the charger, and an upper cable 4D from the rear cable to the opening 8.

The rear cable 4C may be approximately U-shaped.

It is preferable that the upper cable 4D is disposed so as not to be bent as much as possible.

A linear guide 20, a cable guide 30, an upper spring device 40, and a lower spring device 50 may be disposed at the rear of the frame 10, and a dispenser or cable management for managing the charging cable 4 may be configured.

The cable guide 30 may comprise a pulley guide 32 that is raised and lowered along the linear guide 20, and a pulley 34 and 36 that is rotatably installed on the pulley guide 32. The cable guide 30 may guide the charging cable 4.

The cable guide 30 may cause a portion of the inner cable 4B to be bent into a U-shape. The cable guide 30 may be raised by the inner cable 4B.

Pulleys 34 and 36 may be provided in plurality on the pulley guide 32. The plurality of pulleys may comprise an upper pulley 34 and a lower pulley 36 lower than the upper pulley 34.

The upper pulley 34 and the lower pulley 36 may face each other in the up-down direction Z.

A passage may be formed between the upper pulley 34 and the lower pulley 36 through which a portion of the charging cable 4, particularly the inner cable 4B, passes.

Depending on the height of the cable guide 30, the length of the outer cable 4A and the length of the inner cable 4B may vary.

When the cable guide 30 approaches the upper position from the middle position, the length of the inner cable 4B, particularly the rear cable 4C, may gradually decrease, and the length of the outer cable 4A may gradually increase.

When the cable guide 30 approaches the lower position from the middle position, the length of the inner cable 4B, especially the rear cable 4C, can gradually increase, and the length of the outer cable 4A can gradually decrease.

The upper spring device 40 may be disposed on the upper portion of the frame 10. The upper spring device 40 may comprise an upper wire 42, shown in FIG. 1 connected to the pulley guide 32.

The upper portion of the frame 10 may be defined as a portion located above the center of the up and down direction Z of the frame 10.

The upper spring device 40 may be disposed on the rear surface of the frame 10.

The upper spring device 40 may be positioned on the upper of the cable guide 30 and may be spaced apart from the cable guide 30 in the up and down direction Z.

The upper wire 42 may face the linear guide 20 and may be spaced apart from the linear guide 20 in the front and rear direction X.

The upper spring device 40 may comprise a spring around which the upper wire 42 is wound.

The upper spring device 40 may be a spring device for reducing the pulling-out load when the charging cable 4 is pulled out. The user may pull the charging cable 4 from the outside of the charger, and the upper spring device 40 pulls the pulley guide 32 upward, and the user may pull the charging cable 4 with less force.

The upper spring device 40 may function as a damper that limits the rapid descent of the charging cable 4 when the charging cable 4 is retrivered. The user may retrivere the charging cable 4 from the outside of the charger into the inside of the charger, and the upper spring device 40 may limit the rapid retriveral of the charging cable 4, and the lower portion of the charging cable 4 guided to the cable guide 30 may be lowered at a gentle speed instead of being rapidly lowered.

An example of the upper spring device 40 may be a retractor, and the upper spring device 40 may be an upper retract comprising a spring (upper spring) around which an upper wire 42 is wound. The spring (upper spring) may restore the upper wire 42 to its initial position.

If the upper spring device 40 is a retractor, the force that pulls the upper wire 42 and the force that restores the upper wire 42 may be the same, and it may be a device that returns to its original state when the upper wire 42 is pulled and then released. The retractor may have a cylindrical structure and may be manufactured so that the length of the upper wire 42 is longer than that of the spring balancer. The retractor may require a lot of force external force to fully pull out the upper wire 42, and the reaction force may also be high.

Another example of the upper spring device 40 may be a spring balancer in which the wire is connected to the drum and the spring is connected to the drum. In the case of the spring balancer, it may be a device in which the tension is adjusted, and if there is no pulling force (external force), it is restored to its original state by the restoring force of the spring, but if there is a pulling force (external force), it may ensure the stability of the position while withstanding the pulling force. The spring balancer may have a drum-shaped structure by the drum, and may have a limitation on the stroke length of the wire. If the stroke length of the wire is long, the size of the spring balancer may be large. The spring balancer may be maintained at a certain force by adjusting the rotational speed according to the stroke of the wire wound on the drum and by the spring shape. When a force equivalent to the tensile force is applied to the wire, almost no additional external force is required while the wire is released to the maximum stroke of the wire.

Hereinafter, the case where the upper spring device 40 is an upper retractor will be described, but the upper spring device 40 is not limited to being an upper retractor, and if it has a configuration that may pull the cable guide 30 upward, it may be applied. The same drawing symbol "40" is used for the upper spring device and the upper retractor in the description.

The lower spring device 50 may be placed at the lower portion of the frame 10. The lower spring device 50 may comprise a lower wire 52 connected to a pulley guide.

The lower portion of the frame 10 may be defined as a portion located below the center of the frame 10 in the up and down direction Z.

The lower spring device 50 may be disposed on the rear surface of the frame 10.

The lower spring device 50 may be located below the cable guide 30 and may be spaced apart from the cable guide 30 in the up and down direction Z.

The lower wire 52 may face the linear guide 20 and may be spaced apart in the front and rear direction X of the linear guide 20.

The lower spring device 50 may comprise a spring around which the lower wire 52 is wound.

The lower spring device 50 may be a retrieval spring device that allows the charging cable 4 to be retrieved in the charger.

After the user finishes using the charging cable 4, the charging cable 4 may be retrieved to the charger, and the lower spring device 50 pulls the pulley guide 32 downward, and the charging cable 4 may be retrieved to the initial position.

An example of the lower spring device 50 may be a retractor, and the lower spring device 50 may comprise a spring (lower spring) in which a lower wire 52 is wound. The spring lower spring may retrieve the lower wire 52 to the initial position.

If the lower spring device 50 is a retractor, the force that pulls the lower wire 52 and the force that causes the lower wire 52 to be retrieved may be the same, and the device may be such that the lower wire 52 returns to its original position when pulled and then released. The retractor may have a cylindrical structure and may be manufactured such that the length of the lower wire 52 is longer than the spring balance. The retractor may require a lot of force (external force) to fully extend the lower wire 52, and the reaction force may also be high.

The lower spring device 50 may also be a spring balancer in which the wire is connected to the drum and the spring is connected to the drum. In the case of the spring balancer, it may be a device in which the tension is adjusted, and if there is no pulling force (external force), it is restored to its original state by the retrieving force of the spring, but if there is a pulling force (external force), it may withstand the pulling force and ensure stability of the position. The spring balancer may have a drum-shaped structure by the drum, and there may be a limit to the stroke length of the wire. If the stroke length of the wire is long, the size of the spring balancer may be large. The spring balancer may be maintained at a constant force by adjusting the rotational speed according to the stroke of the wire wound around the drum and by the shape of the spring. If a force equal to the tension is applied to the wire, almost no additional external force is required while the wire is unwound to the maximum stroke of the wire.

Hereinafter, the lower spring device 50 is described in the case of a lower retractor, but the lower spring device 50 is not limited to an upper retractor, and is applicable if it has a configuration that may pull the cable guide 30 downward. The lower spring device and the upper retractor are described with the same drawing symbol "50".

The reaction force of the upper retractor 40 and the reaction force of the lower retractor 50 may be different.

The reaction force of the upper retractor 40 may be less than the reaction force of the lower retractor 50. For example, when using (withdrawing) out the charging cable 4, the user initial approved reaction force of the upper retractor 40 may be 3.8 kgf, and when retrieveing the chargingcable 4, the initial required reaction force of the lower retractor 50 may be 5.3 kgf.

In case of there is no external force acting on the charging cable 4, the weight of the inner cable 4B is A, the force acting on the lower retractor 50 is B, and the force restoring force acting on the upper retractor 40 is C, if A+B>C, the charging cable 4 may be retrieved and maintained.

When withdrawing, in case of the external force is F, if F>C-B-A, the charging cable 4 may be extracted, and the length of the inner cable 4B may be reduced. Here, the external force F may be the value of the force with which the user pulls the charging cable 4 plus the weight of the outer cable 4A.

In the case of retrieving the charging cable 4, if the external force is F', if F'<B+A-C, the charging cable 4 may be retrieved, and the length of the inner cable 4B may be increased. Here, the external force F' may be the value obtained by subtracting the weight of the outer cable 4A from the force that the user applies to horizontally retrieve the charging cable 4.

The charger may apply a support force and a reaction force to the charging cable 4 by the upper retractor 40 and the lower retractor 50.

The charger may smoothly move the charging cable 4 by the upper retractor 40 and the lower retractor 50.

The charger may further comprise a rear cover 60, shown in FIG. 3.

The rear cover 60 may be disposed at the rear of the outer case 1.

The rear cover 60 may cover the linear guide 20, the cable guide 30, the upper spring device 40, and the lower spring device 50.

The rear cover may comprise a left rear cover and a right rear cover.

The left rear cover and the right rear cover may cover the sides of the linear guide 20, the cable guide 30, the upper spring device 40, and the lower spring device 50, respectively.

The rear cover may comprise an upper rear cover.

The upper rear cover may cover the upper portions of the linear guide 20, the cable guide 30, the upper spring device 40, and the lower spring device 50, respectively.

The rear cover may comprise a back cover connecting the left rear cover and the right rear cover.

The back cover may cover the rear of each of the linear guide 20, the cable guide 30, the upper spring device 40, and the lower spring device 50.

The charger may also be configured such that at least one of the linear guide 20, the wiper spring device 40, and the lower spring device 50 is not disposed on the frame 10, but is disposed on the rear cover 60.

The charger may comprise a rear guide 70 disposed on the upper portion of the frame, and a front guide 80.

Each of the rear guide 70 and the front guide 80 may comprise a bracket mounted on the upper portion of the frame 10, and a pulley rotatably disposed on the bracket to guide the upper cable 4D.

The rear guide 70 and the front guide 70 may be disposed to be inclined in the same direction.

The rear guide 70 and the front guide 80 may be spaced apart.

The height of the front guide 80 may be higher than the height of the rear guide 70.

The upper spring device 40 may be closer to the rear guide 70 among the rear guide 70 and the front guide 80, as shown in FIGS. 4 and 5.

A portion 4E, see FIG. 1 of the charging cable 4 may be spaced apart from the upper spring device 40 in the left and right direction Y. A portion 4E of the charging cable 4 may be an opposing portion facing the side surface of the upper spring device 40 in the left and right direction Y, and may be a portion of the rear cable 4C among the inner cables 2B.

The charging cable 4 may be guided to the rear guide 70 by passing along the side of the upper spring device 40, as shown in FIG. 4.

The length of the outer cable 4A may be minimized by the linear guide 20, the cable guide 30, the upper spring device 40, and the lower spring device 50, and when using the charging cable 4, the weight in the up and down direction Z may be reduced according to the variable weight of the charging cable 4.

The user must support the weight that increases according to the length of use of the charging cable 4, and at the same time, after using the charging cable 4, the charging cable 4 must be retrieved to the initially set position in order to hide the charging cable 4.

The user may pull the charging cable 4 with less force by the upper wire 42 of the upper spring device 40 pulling the pulley guide 32 upward, and the pull-out load may be reduced by the upper spring device 40.

The charging cable 4 may be automatically retrieved to the initially set position by the lower wire 52 of the lower spring device 50 pulling the pulley guide 32 downward.

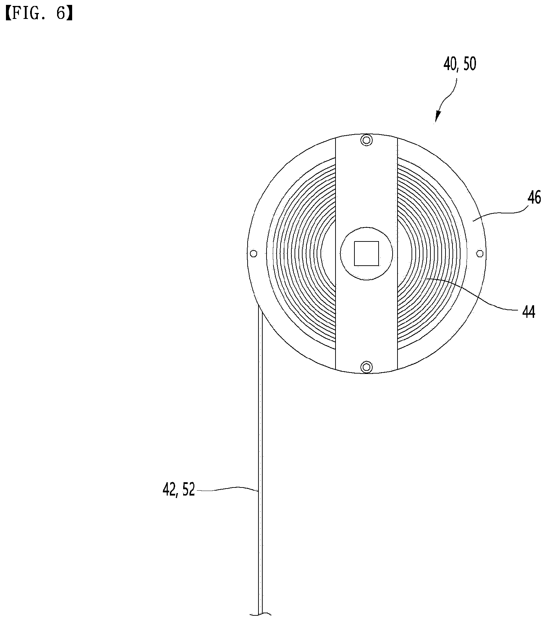

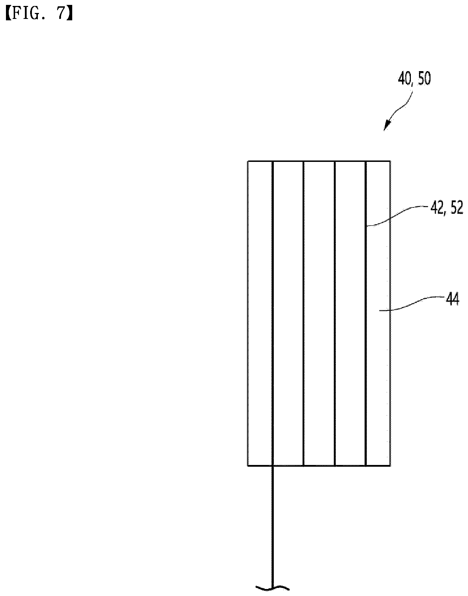

FIG. 6 is a rear view showing a retractor according to the present embodiment, and FIG. 7 is a side view showing the inside of the retractor according to the present embodiment.

The upper retractor 40 and the lower retractor 50 may be the same type of retractor.

The retractor may be a spring device in which the force for pulling the wire and the force for retrieving the wire are the same, and the wire returns to its original state when the wire is pulled and then released.

The retractor may have a wire 42 or 52 wound around the outer circumference of the spring 44.

An example of the spring 44 may be a plate spring wound in a spiral shape, and may have an overall cylindrical or cylindrical shape.

The wire 42 or 52 may be wound around the outer circumference of the plate spring.

The retractor may further comprise a holder 46 supporting the spring 44.

The above description is merely an illustrative explanation of the technical idea of the present disclosure, and various modifications and variations will be possible to those skilled in the art without departing from the essential characteristics of the present disclosure.

Accordingly, the embodiments disclosed in the present disclosure are not intended to limit the technical idea of the present disclosure, but rather to explain it, and the scope of the technical idea of the present disclosure is not limited by these embodiments.

The scope of protection of the present disclosure should be interpreted in accordance with the claims below, and all technical ideas within the equivalent scope should be construed as being comprised in the scope of rights of the present disclosure.

## Claims

1. A charger comprising;
an outer case;
a frame accommodated inside the outer case;
a linear guide disposed on one surface of the frame and elongated in the up and down direction;
a cable guide having a pulley guide that moves up and down along the linear guide, and a pulley rotatably installed on the pulley guide and guiding a charging cable;
an upper retractor disposed on an upper portion of the frame and having a spring wound with an upper wire connected to the pulley guide; and
a lower retractor disposed on the lower portion of the frame and having a spring wound with a lower wire connected to the pulley guide.

2. The charger of claim 1,
wherein the linear guide, the upper retractor, and the lower retractor are disposed on a rear surface of the frame.

3. The charger of claim 2,
wherein a reaction force of the upper retractor and a reaction force of the lower retractor are different.

4. The charger of claim 2,
wherein a reaction force of the upper retractor is less than a reaction force of the lower retractor.

5. The charger of claim 1, further comprising;
a rear cover covering the linear guide, the cable guide, the upper retractor, and the lower retractor.

6. The charger of claim 5,
wherein the rear cover is disposed at a rear of the outer case.

7. The charger of claim 1, further comprising;
a rear guide and a front guide disposed at the upper portion of the frame,
wherein a height of the front guide is higher than a height of the rear guide.

8. The charger of claim 7,
wherein the rear guide and the front guide are disposed to be inclined in the same direction.

9. The charger of claim 7,
wherein the upper retractor is closer to the rear guide of the rear guide and the front guide.
